# EUROPEAN PATENT SPECIFICATION

(11) **EP 0 536 937 B1**
(45) Date of publication and mention of the grant of the patent: **26.02.1997**
(21) Application number: 92308911.4
(22) Date of filing: 30.09.1992
(51) Int. Cl.: D03D 11/02

(54) **Method of manufacturing a packing material**
Verfahren zur Herstellung von Rieselgittermaterial
Méthode de production de grille de garnissage

(30) Priority: 01.10.1991 JP 280548/91
(43) Date of publication of application: 14.04.1993
(73) Proprietor: NAGAOKA INTERNATIONAL CORPORATION, Minami Kawachi-gun, Osaka-fu (JP)
(72) Inventor: Nagaoka, Tadayoshi, Minami Kawachi-gun, Osaka-fu (JP)
(74) Representative: Woodward, John Calvin

(56) References cited:
- EP-A- 0 097 345
- EP-A- 0 286 004
- CH-A- 447 067
- FR-A- 2 599 484
- GB-A- 607 290
- US-A- 4 117 049

## Description

This invention relates to a method for manufacturing a packing used in a device having a plurality of channels for fluid for realizing material transfer, heat exchange or mixing gases, liquids or gas and liquid.

As a packing for the above described object, there is a packing disclosed in Japanese Patent application No. 203976/1991 (JP 95062600). This packing consists of a plurality of permeable sheets which are disposed in parallel to one another and extending in the direction of a main stream of fluid. Projecting portions of these permeable sheets are disposed in the direction crossing the main stream of fluid and these projections perform a function of spacers between adjacent permeable sheets. This packing (hereinafter sometimes referred to as "X-packing" for convenience of explanation because the cross section of a joint portion between two adjacent permeable sheets assumes a shape of the letter X) is beneficial in that fluid flowing down along the permeable sheets repeats joining, mixing, horizontal dispersion and redistribution at each joint of the permeable sheets whereby fluid flow which was not uniform when it was charged in the device gradually becomes uniform which results in an optimum material transfer or heat exchange. Moreover, gas charged in the device passes through liquid flowing along the inclined surfaces of the permeable sheets one after another and necessary contact between the gas and the liquid is achieved by contacting of the gas with the liquid while the gas passes through the permeable sheets, so that material transfer or heat exchange can be effected efficiently with a minimum pressure loss.

EP-A-0097345 discloses a packing structure for use in a process for the exchange of material and/or heat between and/or for mixing of gaseous and/or liquid substances. However, this document does not disclose any method by which the packing structure may be made.

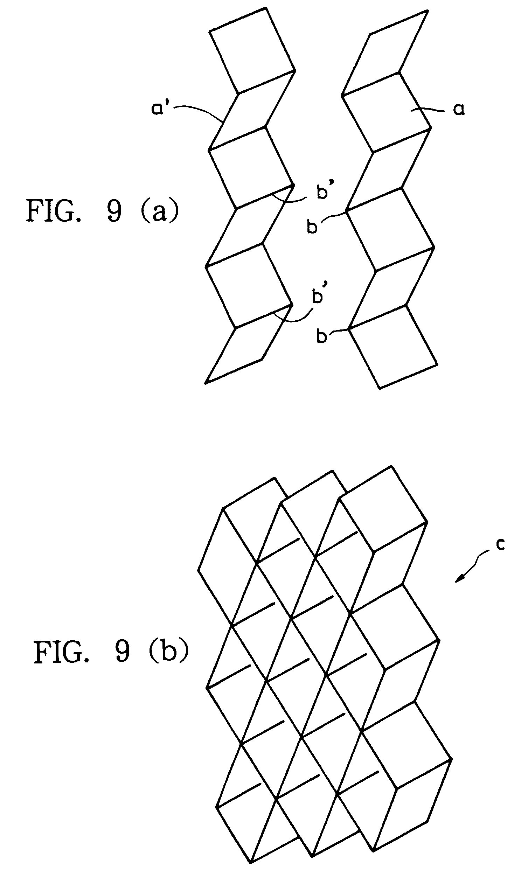

For manufacturing the X-packing, a method which has been carried out in the past employs undulating permeable sheets as shown in (a) of Fig. 9 which are formed by bending sheets of wire-mesh, plastic meshed sheet, cotton cloth or the like permeable material alternately at a certain pitch. According to this method, projecting portions b,b' of adjacent permeable sheets a,a' are joined by welding (in the case of wire-mesh), bonding (in the case of plastic sheet) or sewing (in the case of cotton cloth) together to form an X-packing c as shown in (b) of Fig.9.

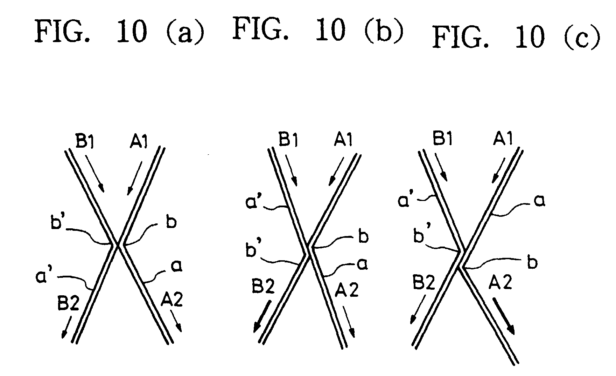

The prior art method for manufacturing an X-packing includes a troublesome step of joining the projections b,b' of the adjacent permeable sheets a,a' manually by welding etc. Besides, the prior art method has the following disadvantage: In the X-packing, dispersion of liquid becomes uneven except when the projecting portions b,b' of the permeable sheets a,a' are in complete line contact with each other as shown in Fig. 10(a). That is, when there is offsetting in the contact between the projecting portions b,b' as shown in Figs. 10(b) and 10(c), a larger volume of liquid tends to flow to a permeable sheet whose point of contact with the adjacent permeable sheet is lower. In the case of Fig. 10(b), for example, equal liquid flows A1 and B1 are redistributed after the joint of the projections b,b' to a flow B2 of a larger volume along the permeable sheet a' and a flow A2 of a smaller volume along the permeable sheet a. Conversely, in the case of Fig. 10(c), equal flows A1 and B1 are redistributed to a flow A2 of a larger volume along the permeable sheet a and a flow B2 of a smaller volume along the permeable sheet a2. The line contact at the projecting portions b,b' shown in Fig. 10(a) is ideal but it is very difficult to realise this ideal line contact in actual joining work of projecting portions b,b' and actual joints obtained tend to become the offset joints shown in Figs. 10(b) and 10(c).

For preventing the above described deviation in distribution of liquid, it is conceivable to join, by welding, bonding or sewing, a belt-like sheet of a single layer or plural layers made of a non-permeable or less permeable material on both sides of the joint between the projecting portions or between the projecting portions thereby to hold liquid flowing from above and distribute it to the respective permeable sheets located below as uniformly as possible. It however involves an extremely difficult work to form joints of a uniform width and thickness by manually welding, bonding or sewing such belt-like sheets on both sides of or between a multiplicity of joints and this prevents mass production of the X-packing and increases manufacturing cost of the X-packing.

It is, therefore, an object of the present invention to provide a method for manufacturing, at a low cost and in a large scale, an X-packing in which aggregation, horizontal dispersion and downward redistribution of liquid at joints of projecting portions of respective permeable sheets can be made uniformly.

According to the present invention, there is provided a method of manufacturing a packing having an internal structure divided into a plurality of chambers or channels connected to one another for use in a device for the transfer of material, heat exchange or mixing between gases, liquids or gas and liquid, said packing forming said internal structure and being made up of a plurality of undulating permeable sheets disposed in parallel to one another to form plural channels and which extend substantially in the direction of a main stream of fluid, projecting portions of respective undulating permeable sheets being disposed in a direction substantially crossing the direction of the main stream and joints being formed between adjacent permeable sheets in the projecting portions wherein said permeable sheets and the joints between adjacent permeable sheets are simultaneously formed by weaving.

More specifically, the method according to the invention comprises the following steps:
(a) weaving a joint between a first permeable sheet and a second permeable sheet adjacent to the first permeable sheet among the permeable sheets of plural channels forming said packing, and weaving a joint between a third permeable sheet adjacent to the second permeable sheet on opposite sides of the first permeable sheet and a fourth permeable sheet adjacent to the third permeable sheet on opposite sides to the second permeable sheet,
(b) weaving portions other than the joints of the respective permeable sheets,
(c) weaving joint between the second permeable sheet and the third permeable sheet, and
(d) weaving portions other than the joints of the respective permeable sheets.

According to the invention, joints and portions other than joints of permeable sheets of respective channels are woven simultaneously one after another and a woven packing having plural channels is provided automatically. Since the packing is manufactured by a continuous operation of a mechanical weaving process based on a predetermined weaving pattern, the manufactured packing has a multiplicity of regularly arranged, closed rhombic chambers of the same size consisting of permeable sheets of uniform meshes in which the joints are formed in a uniform thickness and uniform length due to the uniform weaving process.

Further, according to the method of the invention, manual work such as welding, bonding or sewing is obviated and, therefore, a large scale production of the X-packing is made feasible and the manufacturing cost is remarkably reduced.

The method according to the present invention is most suitably applied to manufacture of the X-packing. The invention is applicable also to manufacture of multi-stratum structure such as a mist eliminator, multi-stratum filter membrane, multi-stratum cloth and aggregate.

A preferred embodiment of the method according to the invention will be described below with reference to the accompanying drawings.

In the accompanying drawings,
Fig. 1 is a side view of a loom used in an embodiment of the invention;
Fig. 2 is a shcematic diagram showing a heddle group used in the embodiment;
Fig. 3 is a diagram showing relationship between operation of the heddle group and weaving of permeable sheets and joints;
Fig. 4 is a diagram showing a state of weaving of portions other than joints by operation of the heddle group;
Fig. 5 is a diagram showing a state of weaving of other joints by operation of the heddle group;
Fig. 6 is a diagram showing relationship between respective woven permeable sheets;
Fig. 7 is a side view showing, in an enlarged scale, a part of joints and portions other than the joints of the woven permeable sheets;
Fig. 8 is a perspective view showing a part of a completed packing;
Fig. 9 is a diagram showing a prior art method for manufacturing an X-packing; and
Fig. 10 is a diagram showing states of joint of the prior art X-packing.

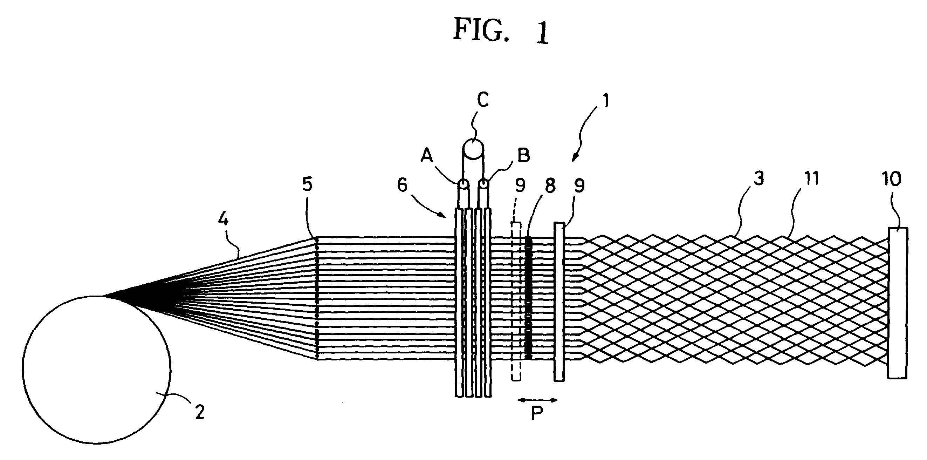

Referring first to Fig. 1, warps used for weaving permeable sheets 11 in plural strata of a packing 3 are wound on a warper 2 of a loom 1. These warps 4 are sorted in plural strata through a back rest 5 and then supplied to a heddle group 6 having a plurality of heddles.

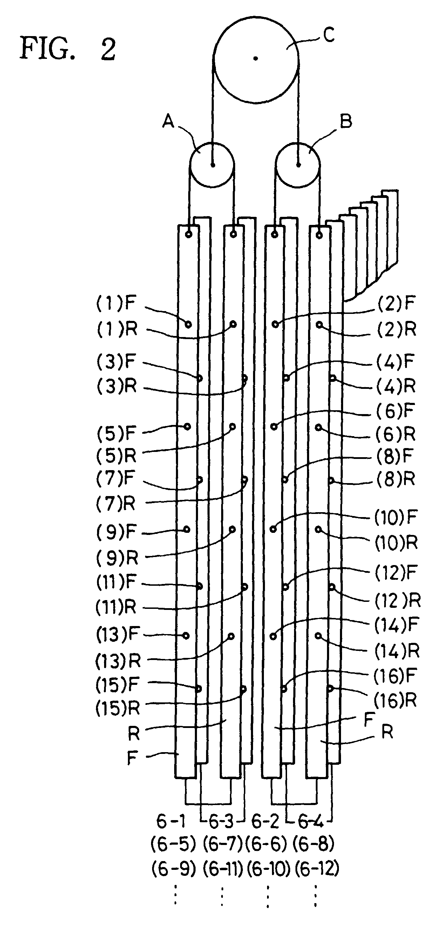

The heddle group 6 includes, as shown in Fig. 2, heddles in sets of a necessary number corresponding to the width of the packing 3 to be woven. In Fig. 2, heddles 6-1, 6-2, 6-3 and 6-4 performing four types of movements by rotation of pulleys A, B and C constitute one set. Likewise, heddles 6-5, 6-6, 6-7 and 6-8 constitute another set and heddles 6-9, 6-10, 6-11 and 6-12 constitute still another set. The heddle group 6 is disposed in parallel in the direction of the width of the packing 13. The helds 6-1, 6-2, 6-3 and 6-4 consist respectively of a pair of front and rear heddles 6-1F, 6-1R, 6-2F, 6-2R etc. The pair of heddles 6-1F and 6-1R (or 6-3F and 6-3R etc.) are suspended from the pulley A in such a manner that when one of the front and rear heddles rises, the other will fall. Likewise, the pair of heddles 6-2F and 6-2R (6-4F, 6-4R etc.) are suspended from the pulley B in such a manner that one of the front and rear heddles rises, the other falls. The pulleys A and B in turn are suspended from the pulley C in such a manner that when one of the pulleys A and B rises, the other will fall. Each of the heddles is formed with eyes (1)F, (1)R etc. for passing warps therethrough in plural stages corresponding in number to the number of strata of the permeable sheets 11 (for convenience of description, only four eyes are shown in each heddle). Eyes (3)F, (3)R etc. of the heddle 6-3 are formed in locations offset downwardly by half pitch from the eyes (1)F, (1)R etc. of the heddle 6-1. The same arrangement is made about the location of the eyes with respect to the other heddles. In Fig. 2, the heddles 6-1, 6-2, 6-3 and 6-4 only among the large number of heddles provided in correspondence to the width of the packing to be woven are illustrated and illustration of the rest of heddles is omitted. Operation of the heddle group 6 will be described later.

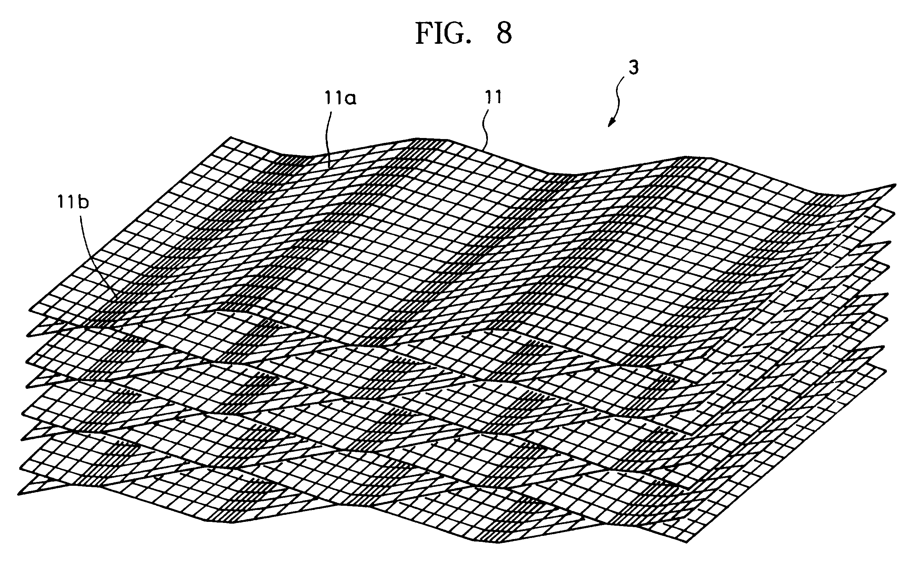

The warps 4 passing through the eyes of the heddles of the heddle group 6 are then supplied to a multi-stage shuttle 8. The multi-stage shuttle 8 is a shuttle having stages corresponding in number to the number of strata of the permeable sheets 11 forming the packing 3 and feeds wefts in weaving of non-joint portions 11a and joints 11b (see Fig. 8) of each permeable sheet 11.

A reed 9 is of a comb-shape having plural grooves through which the warps pass and warps of plural strata forming the permeable sheet 11 pass in plural stages through the same groove. In weaving the non-joint portions 11a and the joints 11b of each permeable sheet 11, wefts are fed by the shuttle 8 and thereafter the reed 9 is reciprocated in the direction of arrow P in Fig. 1 to press the weft in the horizontal direction. As a result, the non-joint portions 11a and the joints 11b of the permeable sheets of the respective strata are simultaneously and continuously woven.

In the present embodiment, the foremost end of the packing 3 to be woven is held by a holder 10. By moving the holder 10 away from the loom 1, the permeable sheets 11 in plural strata are fed horizontally and the packing 3 is thereby woven.

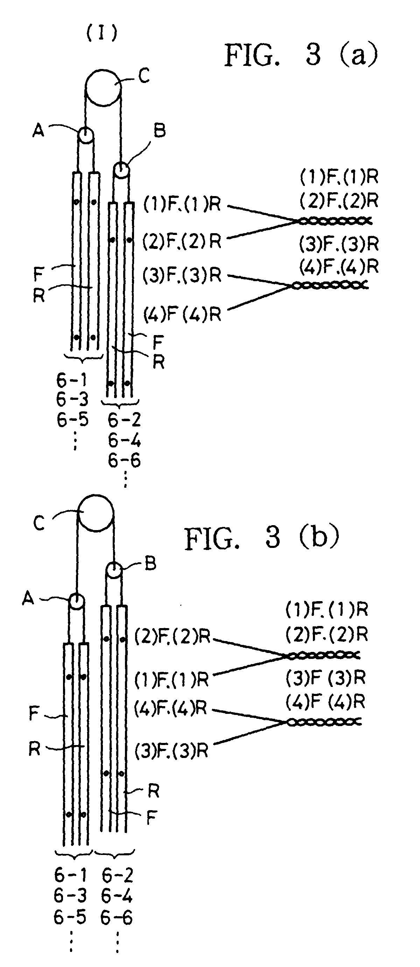

Referring now mainly to Figs. 3 to 5, relationship between the operation of the heddle group 6 and woven states in weaving the non-joint portions 11a and the joints 11b of the permeable sheets 11 will be described.

### Step (I)

In step (I) shown in Fig. 3, joints between respective adjacent permeable sheets such as a joint between a permeable sheet (1) of the first stratum (the uppermost stratum) and a permeable sheet (2) of the second stratum, a joint between a permeable sheet (3) of the third stratum and a permeable sheet (4) of the fourth stratum, and a joint between a permeable sheet (5) of the fifth stratum and a permeable sheet (6) of the sixth stratum are woven.

In Fig. 3, the pulleys A and B are not rotated but the pulley C only is rotated by a predetermined angle alternately in opposite direction. In the state shown in Fig. 3(a), the pulley A is in a lifted position and the pulley B is in a lowered position, so that the heddles 6-1, 6-3, 6-5 etc. are in a lifted position and the heddles 6-2, 6-4, 6-6 etc. are in a lowered position. Each pair of heddles (6-1F and 6-1R etc.) is on the same level. Accordingly, warps (1)F and (1)R for weaving the permeable sheet (1) are in a higher position than the warps (2)F and (2)R for weaving the permeable sheet (2). The warps (1)F and (1)R are on the same level and the warps (2)F and (2)R are on the same level.

In this state, after wefts are passed, the pulley C is rotated counterclockwise by a predetermined angle to move the heddles 6-1 etc. to a lowered position and the heddles 6-2 etc. to a lifted position as shown in Fig. 3(b). The position of the warps is now reversed and the warps (1)F and (1)R are located in a lower position than the warps (2)F and (2)R. At this time, the warps (1)F and (1)R are on the same level and the warps (2)F and (2)R are on the same level. Then, the reed 9 is operated to perform the horizontal pressing.

By repeating the above described operation by a predetermined times, a joint is formed between the permeable sheet (1) and the permeable sheet (2) in such a manner that the warps (1)F, (1)R, (2)F and (2)R are interwoven.

The heddles 6-5, 6-9, 6-13 etc. are on the same level as the heddle 6-1 whereas the heddles 6-6, 6-10, 6-14 etc. are on the same level as the heddle 6-2, so that these heddles on the same levels perform the same operation. The heddles 6-3, 6-7, 6-11, 6-15 etc. perform the same operation as the heddle 6-1 with theri eyes located lower by half pitch than the heddle 6-2. Accordingly, a joint is likewise formed between the warps (3)F, (3)R and (4)F, (4)R for weaving the permeable sheets (3) and (4) and similar joints are formed between other adjacent permeable sheets in a similar manner.

In this manner, the joints 11b (Fig. 8) extending in the main stream in the packing 3 are simultaneously formed between the permeable sheet (1) and the permeable sheet (2), between the permeable sheet (3) and the permeable sheet (4) and between the permeable sheet (5) and the permeable sheet (6) etc. In Fig. 3, joints between the permeable sheets (1) and (2) and between the permeable sheets (3) and (4) only are shown by way of example.

### Step (II)

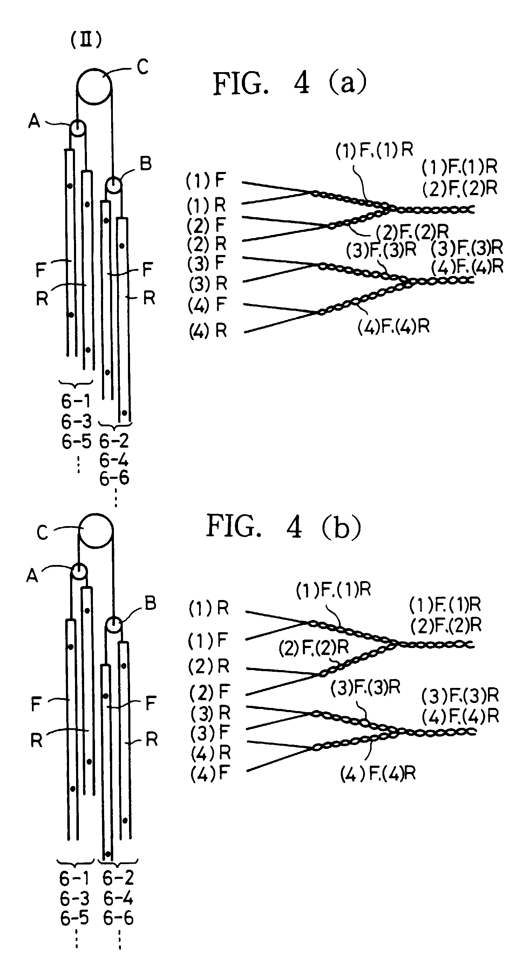

This step is one subsequent to the above described step for weaving the joints and the non-joint portions 11a (Fig. 8) of the respective permeable sheets are woven in this step. The step (II) is shown in Fig. 4.

In this step, the pulley C is rotated by a predetermined angle to bring the pulley A to a lifted position and the pulley B to a lowered position and the pulley C is held stopped in this position. In this state, the warps (1)F, (1)R are always in a higher position than the warps (2)F, (2)R and the warps (3)F, (3)R are always in a higher position than the warps (4)F, (4)R. The pulleys A and B are respectively rotated alternately in opposite direction by a predetermined angle while the pulley C is held stationary. In the state of Fig. 4(a), the heddles of the F side such as the heddles 6-1F, 6-2F etc. are in a lifted position and the heddles of the R side such as the heddles 6-1R, 6-2R etc. are in a lowered position, so that the warp (1)F is positioned higher than the warp (1)R, the warp (2)F is positioned higher than the warp (2)R, the warp (3)F is positioned higher than the warp (3)R and the warp (4)F is positioned higher than the warp (4)R. In this state, wefts are fed between the warps (1)F and (1)R, warps (2)F and (2)R, warps (3)F and (3)R and warps (4)F and (4)R respectively and thereafter the pulleys A and B are rotated in opposite direction by a predetermined angle. This brings the heddles of the F side such as the heddles 6-1F, 6-2F to a lowered position and the heddles of the R side such as the heddles 6-1R, 6-2R etc. to a lifted position as shown in Fig. 4(b). Accordingly, the warps (1)R, (2)R, (3)R and (4)R are positioned higher than the pairing warps (1)F, (2)F, (3)F and (4)F. The reed 9 is now operated to perform the horizontal pressing and thereafter the pulleys A and B are rotated in opposite direction to restore to the state of Fig. 4(a). The above described operation is repeated by a predetermined number of rotation whereby respective non-joint portions 11b of the permeable sheets (1), (2), (3) etc. are simultaneously woven.

### Step (III)

This is a step in which joints 11b are formed between the permeable sheets (2) and (3), permeable sheets (4) and (5) etc.

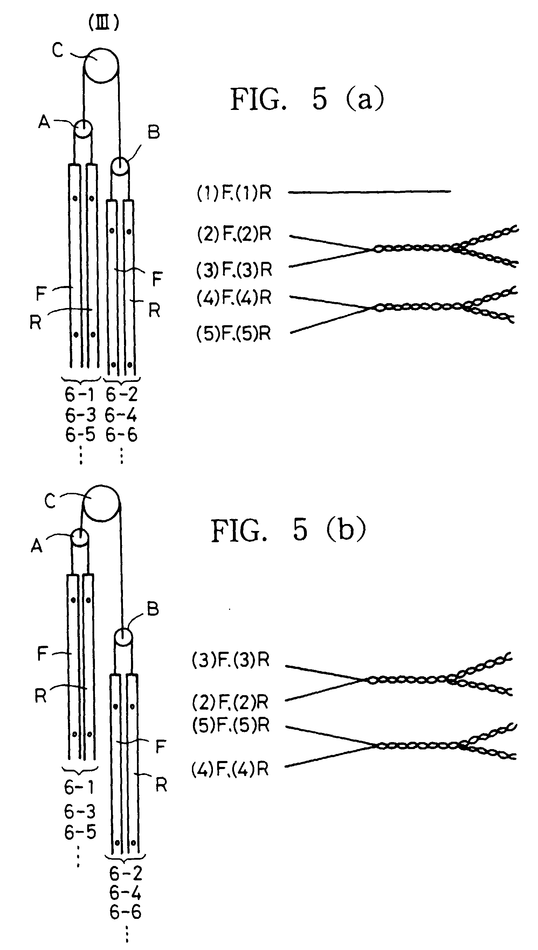

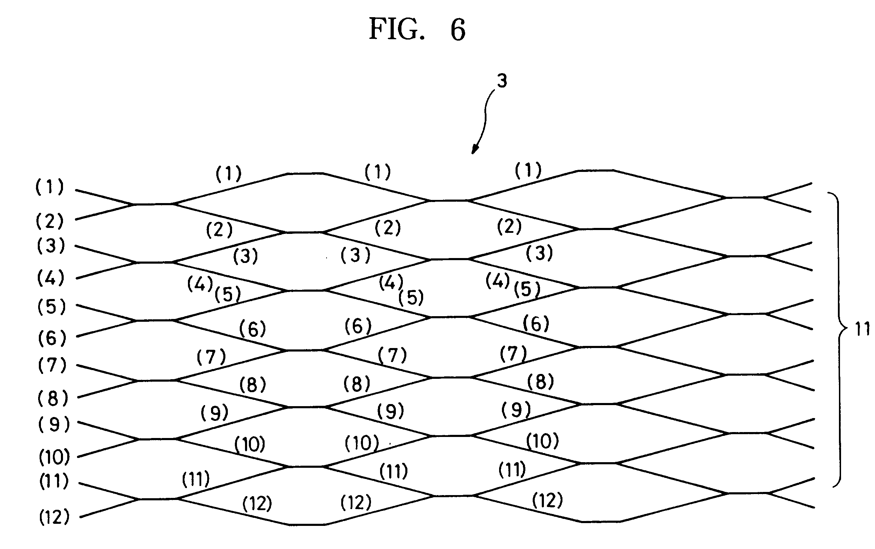

In this state, the pulleys A and B are not rotated but the pulley C is rotated alternately in opposite direction by a predetermined angle between two positions at which the pulleys A is always in a higher position than the pulley B. In the state of Fig. 5(a), the warps (2)F, (2)R of the heddle 6-2 are in a higher position than the warps (3)F, (3)R of the heddle 6-3 and the warps (4)F, (4)R of the heddle 6-4 are at a higher position than the warps (5)F, (5)R of the heddle 6-1. The warps (2)F and (2)R, warps (3)F and (3)R, warps (4)F and (4)R and warps (5)F and (5)R are respectively on the same level. In this state, wefts are passed and then the pulley C is rotated clockwise by a predetermined angle to bring the pulley A to an even higher position than the pulley B as shown in Fig. 5(b). In the state of Fig. 5(b), the warps (3)F and (3)R of the heddle 6-3 are moved to a higher position than the warps (2)F and (2)R of the heddle 6-2 and the warps (5)F and (5)R of the heddle 6-1 are moved to a higher position than the warps (4)F and (4)R of the heddle 6-4. The reed 9 is operated to perform the horizontal pressing and then the pulley C is rotated in opposite direction to restore to the state of Fig. 5(a). By repeating this operation, the joints 11b extending in the direction of the main stream in the packing 3 are woven simultaneously between the permeable sheets (2) and (3), permeable sheets (4) and (5) etc. The forming of the joints between the respective permeable sheets (1), (2), (3) etc. in the steps (I), (II) and (III) is shown in Fig. 6.

### Step (IV)

This step is similar to the above described step (II) so that illustration thereof will be omitted. This step is one subsequent to the joint forming between the permeable sheets (2) and (3) etc. and non-joint portions 11a of the respective permeable sheets 11 are woven again in this step.

In this step, in the same manner as in the step (II), the pulleys A and B are respectively rotated alternately in opposite direction by a predetermined angle while the pulley C is held in a stopped position and the intermittently feeding of the wefts and the horizontal pressing by the reed 9 are repeated by a predetermined number of times whereby non-joint portions 11a of the permeable sheets (1), (2), (3) etc. are simultaneously woven.

After the step (IV), the weaving process returns to the step (I) and then the steps (II), (III) and (IV) are repeated to complete the packing 3 as shown in Fig. 8.

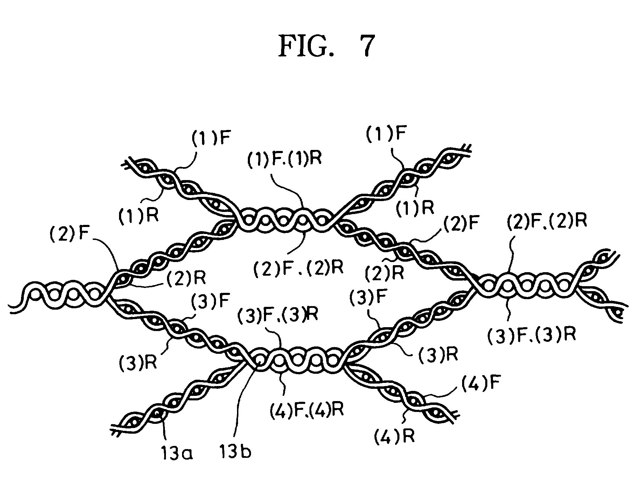

A part of the non-joint portions 11a and the joints 11b of the respective permeable sheets of the completed packing 3 is shown in an enlarged scale in Fig. 7.

In the above described embodiment, the packing 3 is formed by feeding permeable sheets of plural strata in a horizontal direction. If a woven packing can be wound once on a drum and then restored to the shape of the X-packing (e.g., in a case where the packing is woven with cotton yarn), permeable sheets of plural strata may be horizontally fed and then wound on a drum.

The pitch of feeding of wefts may be made variable. By this arrangement, the weft feeding pitch in the joints 11b is made denser than the weft feeding pitch in the non-joint portions 11a, so that joints 11b of a low permeability is formed for the purpose of achieving uniform aggregation and distribution of liquid in the joints 11b. In weaving the non-joint portions 11a, two or more different pitches may also be employed.

As the manner of feeding warps, the horizontal feed system according to which the woven packing 3 leads following warps is preferable for maintaining a constant tension of the warps.

As the wefts, it is preferable to use two types of wefts, one for the non-joint portions 11a and the other for the joints 11b for the purpose of achieving a low permeability in the joints 11b. For example, as shown in Fig. 7, wefts 13b used for the joints 11b are of a larger diameter than wefts 13a used for the non-joint portions 11a.

In the above described embodiment, the joints are woven in such a manner that they extend in the direction of the main stream of the packing. This shape of the joints is preferable for effectively performing aggregation, retention and redistribution of liquid. The shape of the joints however is not limited to this but, for example, joints may be formed by line contact of adjacent permeable sheets.

In the above described embodiment, four types of heddles are operated as one set. The invention is not limited to this but one set of heddles may be composed of a larger number of heddles. The pulleys are not limited to three pulleys as in the above described embodiment but more pulleys may be used in combination. The same operation as the one performed by the pulleys may be performed by using a mechanism for vertically moving heddles or combinations of heddles separately instead of using the pulleys.

According to the invention, sewing, bonding or welding of joints is unnecessary. This is convenient because there is no particular restriction to the material used for warps and wefts. As the warps and wefts, any kind of material such as metal, synthetic resin, vegetable fiber and glass fiber may be used. Also, warps and wefts of different materials may be mixedly woven.

## Claims

1. A method of manufacturing a packing having an internal structure divided into a plurality of chambers or channels connected to one another for use in a device for the transfer of material, heat exchange or mixing between gases, liquids or gas and liquid, said packing forming said internal structure and being made up of a plurality of undulating permeable sheets (11) disposed in parallel to one another to form plural channels and which extend substantially in the direction of a main stream of fluid, projecting portions of respective undulating permeable sheets (11) being disposed in a direction substantially crossing the direction of the main stream and joints being formed between adjacent permeable sheets (11) in the projecting portions wherein said permeable sheets and the joints between adjacent permeable sheets are simultaneously formed by weaving.

2. A method as claimed in claim 1 wherein it comprises the steps of:
a) weaving a joint between a first permeable sheet (11) and a second permeable sheet (11) adjacent to the first permeable sheet (11) among the permeable sheets (11) of plural channels forming said packing, and weaving a joint between a third permeable sheet (11) adjacent to the second permeable sheet (11) on opposite sides of the first permeable sheet (11) and a fourth permeable sheet (11) adjacent to the third permeable sheet (11) on opposite sides to the second permeable sheet (11);
b) weaving portions other than the joints of the respective permeable sheets (11);
c) weaving a joint between the second permeable sheet (11) and the third permeable sheet (11); and
d) weaving portions other than the joints of the respective permeable sheets (11).

3. A method as claimed in claim 1 or claim 2 wherein the feeding of warps (4) of said permeable sheets (11) is carried out by operating heddles (6) in a weaving machine, said heddles (6) having eyes formed in multiple stages in correspondence to the respective permeable sheets (11).

4. A method as claimed in any preceding claim wherein the feeding of wefts in weaving the joints and portions other than at the joints of the permeable sheets (11) is made by a shuttle (8) having weft supply means arranged in plural stages and being capable of feeding wefts corresponding in number to the number of strata of the permeable sheets (11) forming the packing.

5. A method as claimed in any preceding claim wherein in weaving the joints and portions other than at the joints, simultaneous pressing of the wefts is carried out by reed means (9) having an opening through which the respective warps (4) pass in multiple stages.

6. A method as claimed in any preceding claim wherein the pitch of feeding of wefts is varied.

7. A method as claimed in claim 6 wherein the pitch of feeding of wefts in the joints is denser than the pitch of feeding of wefts in portions other than at the joints.

8. A method as claimed in any preceding claim wherein a packing is completed by feeding the permeable sheets (11) of plural channels horizontally.

9. A method as claimed in any preceding claim wherein a packing is completed by feeding the permeable sheets (11) of plural channels horizontally and thereafter winding the permeable sheets (11) into a roll.

## Patentansprüche

1. Verfahren zur Herstellung eines Rieselgitters mit einer Innenstruktur, die in eine Vielzahl von miteinander verbundenen Kammern oder Kanälen unterteilt ist, zur Verwendung in einer Vorrichtung zum Übertragen von Material, den Wärmeaustausch oder das Mischen von Gasen, Flüssigkeiten oder Gas und Flüssigkeit, wobei das Rieselgitter die Innenstruktur ausbildet und aus einer Vielzahl von welligen durchlässigen Schichten (11) besteht, die parallel zueinander zur Bildung zahlreicher Kanäle angeordnet sind und sich im wesentlichen in die Richtung eines Hauptstroms von Fluid erstrecken, wobei vorstehende Teile der jeweiligen welligen durchlässigen Schichten (11) in einer Richtung angeordnet sind, die im wesentlichen quer zur Richtung des Hauptstroms liegt, und Verbindungen zwischen benachbarten durchlässigen Schichten (11) in den vorstehenden Teilen ausgebildet sind, wobei die durchlässigen Schichten und die Verbindungen zwischen benachbarten durchlässigen Schichten gleichzeitig durch Weben ausgebildet werden.

2. Verfahren nach Anspruch 1, welches folgende Schritte umfaßt:
a) Weben einer Verbindung zwischen einer ersten durchlässigen Schicht (11) und einer zweiten durchlässigen Schicht (11) neben der ersten durchlässigen Schicht (11) unter den durchlässigen Schichten (11) zahlreicher Kanäle, welche das Rieselgitter ausbilden, und Weben einer Verbindung zwischen einer dritten durchlässigen Schicht (11) neben der zweiten durchlässigen Schicht (11) an den der ersten durchlässigen Schicht (11) gegenüberliegenden Seiten und einer vierten durchlässigen Schicht (11) neben der dritten durchlässigen Schicht (11) an den der zweiten durchlässigen Schicht (11) gegenüberliegenden Seiten;
b) Weben von anderen Teilen als den Verbindungen der jeweiligen durchlässigen Schichten (11);
c) Weben einer Verbindung zwischen der zweiten durchlässigen Schicht (11) und der dritten durchlässigen Schicht (11); und
d) Weben von anderen Teilen als den Verbindungen der jeweiligen durchlässigen Schichten (11).

3. Verfahren nach Anspruch 1 oder Anspruch 2, wobei das Zuführen von Kettfäden (4) der durchlässigen Schichten (11) durch die Betätigung von Litzen (6) in einer Webmaschine erfolgt, wobei die Litzen (6) Augen haben, die in mehrfachen Stufen ausgebildet sind, welche den jeweiligen durchlässigen Schichten (11) entsprechen.

4. Verfahren nach einem der vorangehenden Ansprüche, wobei die Zuführung von Schußfäden beim Weben der Verbindungen und der anderen Teile als der Verbindungen der durchlässigen Schichten (11) mit einem Schützen (8) erfolgt, bei dem die Schußfadenzuführmittel in mehrfachen Stufen angeordnet sind und Schußfäden in einer der Anzahl von Lagen der durchlässigen Schichten (11), die das Rieselgitter bilden, entsprechenden Zahl zuführen können.

5. Verfahren nach einem der vorangehenden Ansprüche, wobei beim Weben der Verbindungen und der anderen Teile als der Verbindungen ein gleichzeitiges Pressen der Schußfäden durch Rietorgane (9) erfolgt, die eine Öffnung aufweisen, durch welche die entsprechenden Kettfäden (4) in mehrfachen Stufen laufen.

6. Verfahren nach einem der vorangehenden Ansprüche, wobei die Schußfadendichte variiert wird.

7. Verfahren nach Anspruch 6, wobei die Schußfadendichte in den Verbindungen dichter ist als die Schußfadendichte in anderen Teilen als den Verbindungen.

8. Verfahren nach einem der vorangehenden Ansprüche, wobei ein Rieselgitter durch waagerechtes Zuführen der durchlässigen Schichten (11) zahlreicher Kanäle fertiggestellt wird.

9. Verfahren nach einem der vorangehenden Ansprüche, wobei ein Rieselgitter durch waagerechtes Zuführen der durchlässigen Schichten (11) zahlreicher Kanäle und anschließendes Aufwickeln der durchlässigen Schichten (11) zu einer Rolle fertiggestellt wird.

## Revendications

1. Méthode de fabrication d'une garniture ayant une structure interne divisée en plusieurs chambres ou canaux reliés entre eux pour utilisation dans un dispositif pour le transfert de matière, l'échange de chaleur ou le mélange entre gaz, liquides ou gaz et liquide, ladite garniture formant ladite structure interne et étant constituée de plusieurs feuilles perméables ondulées (11) disposées parallèlement les unes aux autres et situées substantiellement dans la direction d'un courant principal de fluide, des parties en saillie de feuilles perméables ondulées respectives (11) étant disposées dans une direction substantiellement transversale à la direction du courant principal et des joints étant formés entre feuilles perméables adjacentes (11) dans les parties en saillie, dans laquelle lesdites feuilles perméables et les joints entre feuilles perméables adjacentes sont formés simultanément par tissage.

2. Méthode selon la revendication 1 dans laquelle elle comprend les étapes de :
a) tissage d'un joint entre une première feuille perméable (11) et une deuxième feuille perméable (11) adjacente à la première feuille perméable (11) parmi les feuilles perméables (11) de plusieurs canaux formant ladite garniture, et tissage d'un joint entre une troisième feuille perméable (11) adjacente à la deuxième feuille perméable (11) sur les côtés opposés de la première feuille perméable (11) et une quatrième feuille perméable (11) adjacente à la troisième feuille perméable (11) sur les côtés opposés à la deuxième feuille perméable (11) ;
b) tissage de parties autres que les joints des feuilles perméables respectives (11) ;
c) tissage d'un joint entre la deuxième feuille perméable (11) et la troisième feuille perméable (11) ; et
d) tissage de parties autres que les joints des feuilles perméables respectives (11).

3. Méthode selon la revendication 1 ou la revendication 2 dans laquelle l'avance des chaînes (4) desdites feuilles perméables (11) est effectuée par le fonctionnement de lisses (6) dans une machine à tisser, lesdites lisses (6) ayant des oeillets formés en étages multiples de manière correspondante aux feuilles perméables respectives (11).

4. Méthode selon l'une quelconque des revendications précédentes dans laquelle l'avance des trames dans le tissage des joints et des parties autres que les joints des feuilles perméables (11) est assurée par une navette (8) ayant un moyen d'alimentation en trames agencé en plusieurs étages et pouvant fournir des trames correspondant en nombre au nombre de strates des feuilles perméables (11) formant la garniture.

5. Méthode selon l'une quelconque des revendications précédentes dans laquelle, dans le tissage des joints et des parties autres que les joints, le pressage simultané des trames est assuré par un moyen de ros (9) ayant une ouverture par laquelle les trames respectives (4) passent en étages multiples.

6. Méthode selon l'une quelconque des revendications précédentes dans laquelle le pas d'avance des trames varie.

7. Méthode selon la revendication 6 dans laquelle le pas d'avance des trames dans les joints est plus dense que le pas d'avance des trames dans les parties autres que les joints.

8. Méthode selon l'une quelconque des revendications précédentes dans laquelle une garniture est achevée par l'avance des feuilles perméables (11) de plusieurs canaux dans le sens horizontal.

9. Méthode selon l'une quelconque des revendications précédentes dans laquelle une garniture est achevée par avance des feuilles perméables (11) de plusieurs canaux dans le sens horizontal, puis enroulement des feuilles perméables (11) en un rouleau.
